Europäisches Patentamt

European Patent Office

Office européen des brevets

(11) Publication number: **0 386 829 B1**

# EUROPEAN PATENT SPECIFICATION

(45) Date of publication of patent specification: **06.04.94**    (51) Int. Cl.⁵: **B01J 8/10**, C01G 21/14

(21) Application number: **90200471.2**

(22) Date of filing: **28.02.90**

(54) **Process for continuously reacting solids slurried in a liquid and/or liquids and solids.**

(30) Priority: **02.03.89 IT 1962389**

(43) Date of publication of application:
**12.09.90 Bulletin 90/37**

(45) Publication of the grant of the patent:
**06.04.94 Bulletin 94/14**

(84) Designated Contracting States:
**BE CH DE DK ES FR GB GR LI LU NL SE**

(56) References cited:
**GB-A- 1 589 814**
**GB-A- 2 008 083**
**US-A- 1 898 405**

(73) Proprietor: **NUOVA SAMIM S.p.A.**
**Via Caldera 21**
**I-20153 Milan(IT)**

(72) Inventor: **D'Altilia, Gianluigi,**
**Via E. Jenner 45,**
**I-00151 Rome(IT)**
Inventor: **Magi, Gianpaolo,**
**Pian Due Torri 92**
**I-00146 Rome(IT)**
Inventor: **Venditti, Umberto,**
**Via Santa Angela Merici**
**I-00162 Rome(IT)**

(74) Representative: **De Carli, Erberto et al**
**ING. BARZANO & ZANARDO MILANO S.p.A.**
**Via Borgonuovo, 10**
**I-20121 Milano (IT)**

## Description

This invention relates to a process for continuously reacting solids slurried in a liquid and/or liquids and solids, by stirring them in a longitudinally baffled rotary cylindrical reactor.

A particular application of the process is the carbonation of lead suphate.

In the metallurgy of lead coming from spent storage batteries, a "paste" is obtained, containing 35% to 40% by weight of lead sulphate, from 25% to 30% of various lead oxides, and several organic battery components, such as ebonite, polyvinyl chloride, polypropylene.

In the most recent lead recovery processes, lead from spent storage batteries is treated with sodium carbonate and ammonium bicarbonate, to convert lead sulphate into lead carbonate, the reaction patterns being:

$$PbSO_4 + Na_2CO_3 = PbCO_3 + Na_2SO_4$$
$$PbSO_4 + (NH_4)_2CO_3 = PbCO_3 + (NH_4)_2SO_4$$

The slurry thus obtained is filtered and the separated solids are sent to a reduction kiln to recover metallic lead, the filtrate, which contains sodium sulphate, is sent to crystallization to recover anhydrous sodium sulphate.

Carbonation of lead sulphate is imperative, both for environmental reasons, due to the evolution of sulphur dioxide during progress of the reduction of lead sulphate, and due to economical reasons (a facility for separating $SO_2$ from the exhaust fumes is required; and, furthermore, $PbCO_3$ is reduced at lower temperatures).

Usually, the reaction is made take place inside batchwise-operating reactors, e.g., inside vats equipped with stirring means but, inasmuch as it is necessary to limit the introduction of water owing to obvious financial reasons (the evaporation to be carried out in order to cause $Na_2SO_1$ to crystallize requires considerable amounts of fuel), the ratio of the solid to the liquid is generally of about 1500-1700 g/litre, with a specific gravity of about 2.5 kg/dm$^3$, and anyway not lower than 2 kg/dm$^3$.

With the normal stirrers, also with the high-intensity stirrers, large installed powers are required, and, in any case, the results are not satisfactory. Furthermore, owing to the fact that said vats are large-size vessels (of more than 50 m$^3$ of capacity, with heights higher than 4 m), in practice the blades of the stirrer only act as scrapers, with a negligible stirring effect. In fact, although on a laboratory scale, in bench-top vats the order of magnitude of the reaction time is of about 1 hour, in facilities equipped with stirred vats said reaction time increases up to a value of not less than 2-3 hours.

On samples drawn at variable vat levels, it was observed that layers are formed, the specific gravity of which increases with decreasing level relatively to the bottom of the same vats; this demonstrates that the slurry, notwithstanding the stirrers, tends to decant.

A slight improvement can be obtained by recycling the slurry into itself, by means of a pump.

GB-A-1 589 814, for example, discloses an apparatus for carrying out reactions between solids in liquid suspension and/or between liquids and solids, consisting of a rotary horizontal cylinder provided with baffles wherein the reactants enter the horizontal cylinder at an end thereof and the reacted products leave said cylinder at its other end, said ends having cylindrical shape with a diameter smaller than that of the horizontal cylinder.

US-A-1 898 405 also discloses an apparatus for carrying out reactions between solids in liquid suspension and /or between liquids and solids and in particular for the carbonation of lead sulphate. It consists of a rotary horizontal cylinder provided with longitudinal baffles.

Summing up, these are static, batchwise-working, bulky pieces of equipment, with a low kinetic efficiency.

From the foregoing, it appears that there is the necessity of solving the problem satisfactorily, both from the point of view of the process control (distribution of materials, temperature, pH, for example), and the kinetic requirement of providing a continuous process.

The invention has solved the problems inherent in the stirring procedure, while making it possible to reduce the reaction time.

The invention, therefore, provides a process for continuously reacting solids slurried in a liquid and/or liquids and solids, by stirring them in a longitudinally baffled rotary cylindrical reactor having frustoconical ends, or cylindrical ends of a diameter less than the diameter of said rotary cylindrical reactor, the reactants flowing from one end of said reactor to the opposite end thereof, characterized in that the reactor diameter (D, in m), the volume rate of flow (Q, in m$^3$ hourly), the reaction time (Tr, in hours) and the length of the cylindrical reactor portion (L, in m) are related to each other so that they meet the relationship:

$$D = \frac{K \, (Tr.Q)^{\frac{1}{2}}}{L}$$

wherein K is a constant having a value of from 1,5 to 3, and Tr is 0,3 hour as a maximum.

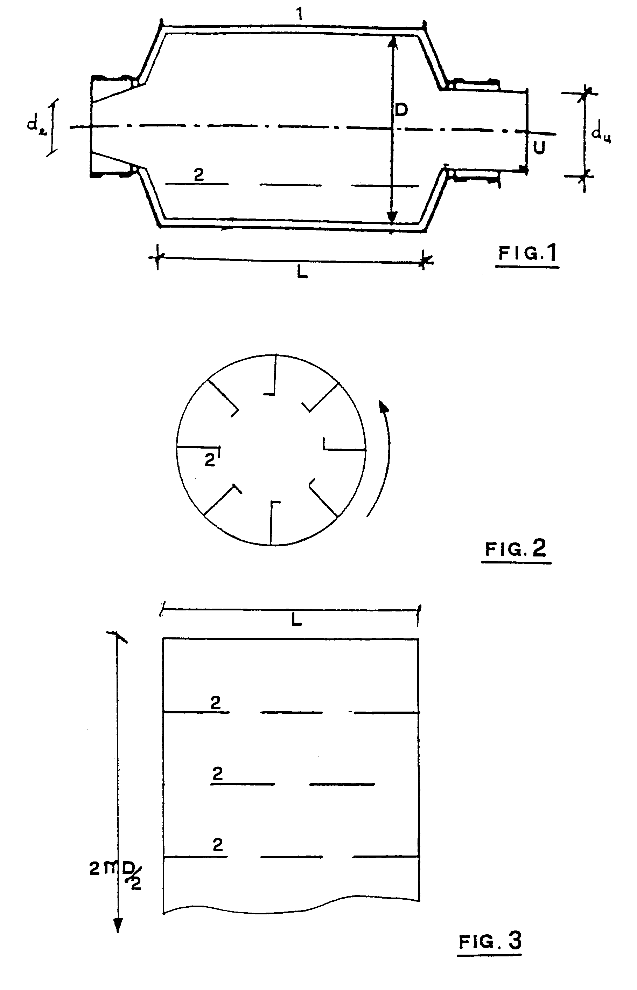

Figure 1 of the accompanying drawing illustrates the instant process and the apparatus for performing it. According to a preferred embodiment of the process in question, in the apparatus for performing it, the L/D ratio is of from 1,4 to 1,6.

Furthermore, the diameter ($d_u$) of the end from which the reacted products leave the cylinder should be preferably lower than, or equal to, D/3, and the diameter ($d_e$) of the end through which the reactants enter the cylinder should be preferably comprised within the range of from 0.8 $d_u$ up to 0.9 $d_u$.

The revolution speed of the apparatus should be optimizied as a function of the content of suspended solids, and, summing up, of the specific gravity of the slurry of the "paste"; it is preferably comprised within the range of from 5 to 100 revolutions per minute, and, more preferably, within the range of from 7 to 30 revolutions per minute.

The longitudinal baffles, provided inside the interior of the horizontal cylinder in order to raise the slurry during the revolution and then allow it to fall back to the underlying baffle, can be:

- either at a constant angle or at a variable angle (i.e., "bent" or "helical"), forming an angle to the revolution axis which is comprised within the range of from 0 to 90° (excluding the value of 90° for the baffles at constant angle);
- either continuous or discontinuous (whether staggered or less) along the generatrix of the horizontal cylinder);
- in a number comprised within the range of from 4 to 12 on a whatever section perpendicular to the genratrices of the horizontal cylinder;
- of any shapes.

Inasmuch as the possibility exists that inside the material to be treated there are granules of Pb metal, it is recommended that the cylinder be given a slight slope which secures the advancing of the metal (at least of the finest-granulometry portions thereof) up to overflow through the discharge outlet: for example, a downwards slope lower than, or equal to, 3°, from the inlet end to the outlet end.

An example is given now, which should not be understood as being limitative of the present invention.

Example

Facility for the treatment of 80,000 tons/year of Pb batteries, from which 48,500 tons/year are separated of a "paste" having the following composition (by weight):

| | |
|---|---|
| - $Na_2SO_4$ | = 0.34% |
| - $Na_2CO_3$ | = 0.04% |
| - $PbSO_4$ | = 38.31% |
| - $PbO_x$ | = 26.8% |
| - Pb metal | = 4.41% |
| - Pb/Sb metal | = 0.81% |
| - ebonite | = 0.81% |
| - separators | = 0.42% |
| - others | = 1.44% |
| - $H_2O$ | = 26.62% |

The "paste" is fed to the continuous reactor (Figure 1) together with $Na_2CO_3$ (as such or as an aqueous solution), and water, until a ratio of solid/liquid of approximately 1,600 g/litre is obtained.

The resulting throughput is of about 3.5 $m^3$/hour for 330 days/year, over three daily shifts.

With a rated stay time of 20 minutes (so as to endow the reactor with flexibility, in that commercially complete conversions can be achieved during a 50%-lower time), a reactor featuring the following characteristics is obtained:

3

| - Diameter of the horizontal cylinder (D) | = 1000 mm |
| - Useful length (L) | = 3000 mm |
| - Outlet diameter ($d_u$) | = 300 mm |
| - Inlet diameter ($d_e$) | = 250 mm |

Therefore, a reactor of about 2.5 m$^3$ of volume, with a filling coefficient of about 29% is obtained.

In Figure 2, a cross (radial) section is represented, which schematically shows the longitudinal baffles used.

They are in a number of 8 and have an "L"-shape (of 50 x 200 x 800 mm of size). They are discontinuous and staggered, as one can also see from Figure 3.

## Claims

1. Process for continuously reacting solids slurried in a liquid and/or liquids and solids, by stirring them in a longitudinally baffled rotary cylindrical reactor having frustoconical ends, or cylindrical ends of a diameter less than the diameter of said rotary cylindrical reactor, the reactants flowing from one end of said reactor to the opposite end thereof, characterized in that the reactor diameter (D, in m), the volume rate of flow (Q, in m$^3$ hourly), the reaction time (Tr, in hours) and the length of the cylindrical reactor portion (L, in m) are related to each other so that they meet the relationship:

$$D = \frac{K\,(Tr.Q)^{\frac{1}{2}}}{L}$$

wherein K is a constant having a value of from 1,5 to 3, and Tr is 0,3 hour as a maximum.

2. Process according to Claim 1, wherein the solid is a paste recovered from spent storage batteries, and the liquid is a solution of sodium carbonate.

3. Process according to Claim 2, wherein said paste is an aqueous dispersion comprising sodium sulphate, sodium carbonate, lead sulphate, lead oxides, metallic lead as such or in admixture with antimony, and ebonite and separator scraps.

4. Process according to Claim 2, wherein the ratio of solids to liquid in said paste is 1,600 g/l.

## Patentansprüche

1. Verfahren zur Durchführung einer kontinuierlichen Reaktion von in einer Flüssigkeit suspendierten Feststoffen und/oder Flüssigkeiten und Feststoffen, bei dem man sie in einem mit longitudinalen Leitblechen ausgestatteten, zylindrischen Rotationsreaktor, der stumpfkegelförmige Enden oder zylindrische Enden mit kleinerem Durchmesser als dem Durchmesser des zylindrischen Rotationsreaktors aufweist, rührt, wobei die Reaktionspartner von einem Ende des Reaktors zu dessen gegenüberliegenden Ende fließen, dadurch gekennzeichnet, daß der Reaktordurchmesser (D, in m), die Volumenfließgeschwindigkeit (Q, in m$^3$ pro Stunde), die Reaktionszeit (Tr (übertragen-empfangen), in Stunden) und die Länge des zylindrischen Teils des Reaktors (L, in m) miteinander so in Beziehung stehen, daß sie folgende Gleichung erfüllen:

$$D = \frac{K\,(Tr.Q)^{\frac{1}{2}}}{L} \quad ,$$

worin
K eine Konstante mit einem Wert von 1,5 bis 3 und
Tr maximal 0,3 Stunden ist.

4

**2.** Verfahren gemäß Anspruch 1, bei dem der Feststoff eine aus verbrauchten Akkumulatoren bzw. Batterien wiedergewonnene Paste ist und die Flüssigkeit eine Lösung von Natriumcarbonat ist.

**3.** Verfahren gemäß Anspruch 2, bei dem die Paste eine wässrige Dispersion ist, die Natriumsulfat, Natriumcarbonat, Bleisulfat, Bleioxide, metallisches Blei als solches oder in einer Beimischung mit Antimon und Ebonit und Bruchstücke bzw. Schrott von Abstandshaltern bzw. Separatoren enthält.

**4.** Verfahren gemäß Anspruch 2, bei dem das Verhältnis von Feststoffen zu Flüssigkeit in der Paste 1600 g/l beträgt.

**Revendications**

**1.** Procédé pour faire réagir en continu des solides en suspension épaisse dans un liquide et/ou des liquides et des solides en les agitant dans un réacteur cylindrique rotatif cloisonné dans le sens longitudinal et ayant des extrémités tronconiques ou des extrémités cylindriques dont le diamètre est inférieur au diamètre dudit réacteur cylindrique rotatif, les réactants s'écoulant depuis une extrémité dudit réacteur jusqu'à son extrémité opposée, caractérisé en ce que le diamètre du réacteur (D, en m), le débit volumique d'écoulement (Q, en m$^3$ par heure), le temps de réaction (Tr, en heures) et la longueur de la partie cylindrique du réacteur (L, en m) sont reliés les uns aux autres de façon à satisfaire à la relation:

$$D = \frac{K \; (Tr . Q)^{1/2}}{L}$$

dans laquelle K est une constante ayant une valeur comprise entre 1,5 et 3 et Tr vaut 0,3 heure au maximum.

**2.** Procédé selon la revendication 1, dans lequel le solide est une pâte récupérée à partir d'accumulateurs épuisés et le liquide est une solution de carbonate de sodium.

**3.** Procédé selon la revendication 2, dans lequel ladite pâte est une dispersion aqueuse contenant du sulfate de sodium, du carbonate de sodium, du sulfate de plomb, des oxydes de plomb, du plomb métallique, pur ou en mélange avec de l'antimoine, et de l'ébonite, et des déchets de séparateurs.

**4.** Procédé selon la revendication 2, dans lequel le rapport solides/liquide dans ladite pâte vaut 1,600 g/l.

FIG.1

FIG. 2

FIG. 3